# EUROPÄISCHE PATENTSCHRIFT

(11) **EP 2 775 178 B1**
(45) Veröffentlichungstag und Bekanntmachung des Hinweises auf die Patenterteilung: **11.05.2016**
(21) Anmeldenummer: 14157850.0
(22) Anmeldetag: 05.03.2014
(51) Int. Cl.: F16L 19/02, F16K 27/00

(54) **Mehrwegeventilblock**
Multipath valve block
Bloc distributeur

(30) Priorität: 07.03.2013 DE 202013002441 U
(43) Veröffentlichungstag der Anmeldung: 10.09.2014
(73) Patentinhaber: Gemü Gebr. Müller Apparatebau Gmbh & Co. Kommanditgesellschaf, 74653 Ingelfingen (DE)
(72) Erfinder: Müller, Fritz, 74653 Ingelfingen (DE); Oettinger, Nicole, 74653 Künzelsau (DE); Mayer, Peter, 74523 Schwäbisch Hall (DE)
(74) Vertreter: DREISS Patentanwälte PartG mbB

(56) Entgegenhaltungen:
- EP-A2- 0 058 123
- EP-A2- 0 442 505
- CA-A1- 2 615 294
- DE-A1- 4 237 219
- FR-A- 1 274 276
- JP-A- 2009 144 872
- US-A- 3 337 181
- US-A1- 2003 155 024
- US-A1- 2012 032 438
- US-A1- 2012 126 532
- US-B1- 6 302 446

## Beschreibung

Die Erfindung betrifft einen Mehrwegeventilblock zur Steuerung von Fluiden, insbesondere von Flüssigkeiten oder Gasen, mir den Merkmalen des Oberbegriffs des Anspruchs 1.

Bei der Steuerung von strömenden Flüssigkeiten, Gasen oder Dampf sind in vielen Anwendungsbereichen oft komplexe Funktionalitäten erforderlich. Diese werden heute zum Beispiel über viele einzelne Ventile realisiert, welche über viele Fittings und Rohre miteinander verbunden sind. Das erfordert viel Platz, und die Montage ist aufgrund einer hohen Anzahl von Einzelteilen sehr aufwändig. Gleichzeitig ist jede Montagestelle und Rohrverbindung eine potenzielle Leckagestelle, die das Sicherheitsrisiko erhöht.

Mehrwegeventilblöcke vermeiden diese Nachteile, sind kompakt aufgebaut und können Platz sparend verschiedene Funktionen übernehmen. Sie können aufgrund ihres individuellen Designs unterschiedliche Funktionen auf kleinstem Raum vereinen. Sie sind leichtgewichtig, benötigen wenig Platz, sind schnell montiert und multifunktional.

Mehrwegeventilblöcke können z.B. verwendet werden, um flüssige oder gasförmige Stoffe beispielsweise zu mischen, zu verteilen, zu trennen oder beliebig andersartig zu steuern. Realisierbar sind auch Sicherheitsfunktionen, Doppelabsperrungen, Querverbindungen und Regelungen.

Einlass- und Auslass-Leitungen der Mehrwegeventilblöcke werden dazu bekanntermaßen in Anschlussbereiche der Mehrwegeventilblöcke z.B. eingeschweißt oder eingeklebt. Außerdem zeigt die DE 10 2006 021 709 A1 beispielsweise ein Sperrventil, bei dem die Anschlussleitungen in das Ventil eingeschraubt werden. US 6,30 2,446 B1 beschreibt ein einzelnes Ventil mit einer zweigeteilten Schlauchschelle. DE 42 37 219 A1 betrifft eine teilbare Überwurfmutter zur Verbindung zweier Rohrstücke. US 2003/0155024 A1 offenbart ein Ventil mit nach außen ragenden Anschlussstutzen, an die mit Überwurfmuttern Rohrstücke angeschlossen werden können. US 2012/0126532 A1 beschreibt eine mehrteilige Schlauchschelle.

Durch die vielfältigen Anwendungsmöglichkeiten eines Mehrwegeventilblocks besteht der Wunsch nach einer flexiblen und einfachen Handhabung der Mehrwegeventilblöcke. Insbesondere ist für einen Kunden ein einfaches und flexibel handhabbares Anschließen der Einlass- und Auslass-Leitungen an den Mehrwegeventilblock ein Indiz für eine gut durchdachte Technologie.

Der Erfindung liegt die Aufgabe zugrunde, das Anschließen der Einlass- und Auslass-Leitungen bei einer flexiblen Handhabung weiter zu vereinfachen.

Zur Lösung der Aufgabe wird ein Mehrwegeventilblock mit den Merkmalen des Anspruchs 1 gelöst.

Die Anschlusselemente bilden den Übergang des Mehrwegeventilblocks zu den Anschlussleitungen. Erfindungsgemäß wird realisiert, dass die Anschlussleitungen nicht direkt im Basiskörper befestigt werden, sondern dass ein separates Befestigungselement, nämlich die Schraubhülse, beim Verbinden mit einem Gewinde des Basiskörpers nach Art einer Schraubverbindung zusammenwirkt. Das hat den Vorteil, dass es sich hierbei einerseits um eine lösbare Verbindung handelt, andererseits das Anschlusselement mit samt dort angeschlossener Teile (Fittings, Leitungen, etc.) beim Anschließen oder beim Lösen nicht verdreht oder gedreht werden muss. Dies ist oft sehr hinderlich. Außerdem kann mit einfachen Mitteln eine druckdichte Verbindung geschaffen werden.

Die lösbare Verbindung bzw. Anschlussmöglichkeit der Anschlussleitung ermöglicht die Austauschbarkeit des Anschlusselements. So kann gemäß der Anforderungen des über den Mehrwegeventilblock zu steuernde Mediums (z.B. Flüssigkeit, Gas, Dampf) das Anschlusselement entsprechend angepasst bzw. optimiert werden. Beschädigte Anschlusselemente sind schnell ausgetauscht.

Die Befestigung der Anschlussleitung am Anschlusselement ist beliebig. Dies kann über ein am Anschlusselement angeordnetes Innen- oder Außengewinde aber auch über eine Steckverbindung geschehen, die ebenfalls druckdicht ausgebildet sein kann. Zwischen dem Anschlusselement und der Anschlussleitung kann bei Bedarf auch zusätzlich ein Fitting vorgesehen sein.

Dadurch, dass die Schraubhülse in Achsrichtung geteilt ist, ist die Form des Anschlusselements für die Erfindung bedeutungslos. Bei einer beispielsweise zweigeteilten Schraubhülse kann die Schraubhülse von außen radial an das Anschlusselement angelegt werden und damit das Anschlusselement sicher umschließen. Bei Bedarf kann die Schraubhülse auch mehr als zwei Teile umfassen. Die Innenfläche der Schraubhülse sollte dabei jedoch zumindest abschnittsweise der Kontur des Anschlusselements folgen, damit eine zuverlässige Verbindung geschaffen werden kann. Die Schraubhülse ist aus Metall, insbesondere Edelstahl, oder aus Kunststoff hergestellt.

Erfindungsgemäß ist vorgesehen, dass das Anschlusselement eine Umfangsnut umfasst, in die zur Arretierung des Anschlusselements im Basiskörper zumindest ein Teil eines in Achsrichtung geteilten Ringelements oder Spannring zumindest abschnittsweise eingreift. Dabei ist insbesondere vorgesehen, dass das Ringelement ein L-förmiges Profil aufweist, wobei ein Schenkel des L-förmigen Profils in die Umfangsnut eingreift, und das Ringelement im Bereich der dem Basiselement zugewandten Stirnseite des Anschlusselements angeordnet ist. Diese Ausgestaltung weist den Vorteil auf, dass die Arretierung des Anschlusselements in einer einfachen Weise von vorne montiert werden kann. Das beispielsweise zweigeteilte Ringelement kann vor dem Einsetzen des Anschlusselements in den Anschlussbereich beidseitig in die Umfangsnut des Anschlusselements eingesetzt werden. Durch das Ringelement wird ein reibungsarmes Verbinden der Anschlussleitung über das Anschlusselement realisiert, so dass bei einem Einschrauben und einem Herausschrauben der Schraubhülse und Befestigen des Anschlusselements an den Basiskörper das Anschlusselement nicht mitgedreht wird. Die Art einer solchen Arretierung des Anschlusselements ist aus der DE 20 2011 105. 649 U1 bekannt.

Zum Einschrauben und Herausschrauben der Schraubhülse an den Basiskörper ist vorgesehen, dass die Schraubhülse ein Außengewinde aufweist, das mit einem im Anschlussbereich des Basiskörpers angeordneten Innengewinde zusammenwirkt. Dies stellt eine kostengünstige und zuverlässige Verbindung dar. Der Basiskörper wird beim Einschrauben und Herausschrauben der Schraubhülse nicht in Mitleidenschaft gezogen, wie es beispielsweise bei einer Schweiß- oder Klebeverbindung sein kann.

Außerdem ist vorgesehen, dass das Anschlusselement eine radial nach außen abragende Schulter aufweist, die insbesondere als umlaufender Außenbund ausgebildet ist. Die Schulter dient bevorzugt dazu, eine Anpressfläche für die Schraubhülse, oder zumindest einen Teil davon, zu bilden, über die das Anschlusselement an den Basiskörper angeordnet wird.

In einer alternativen Ausführungsform ist vorgesehen, dass die Schraubhülse eine radial nach innen ragende, insbesondere als umlaufender Innenbund ausgebildete Schulter aufweist, wobei die Schulter des Anschlusselements und die Schulter der Schraubhülse beim Einschrauben der Schraubhülse in den Basiskörper aneinander anliegen und zusammenwirken. Dabei verlaufen vorzugsweise die aneinander anliegenden Anlageflächen der beiden Schultern des Anschlusselements und der Schraubhülse komplementär zueinander und schließen dabei einen Winkel zur Längsachse ein, der kleiner als 90° ist. Dadurch wird ein besonders reibungsarmes Verbinden der Anschlussleitung über das Anschlusselement realisiert, so dass bei einem Einschrauben und einem Herausschrauben des Anschlusselements an den Basiskörper ein Mitdrehen der Anschlussleitung verhindert wird. Die beiden aneinander liegenden Schultern bilden eine so große Fläche, dass eine besonders druckdichte Verbindung erzeugt werden kann.

Um das Einschrauben und Herausschrauben der Schraubhülse zu erleichtern, kann die Schraubhülse an einem vom Basiskörper herausragenden Teil am Außenumfang beispielsweise eine Rändelung oder eine Werkzeugangriffsfläche aufweisen. Die Werkzeugangriffsfläche kann z.B. einen Sechskant für einen Schraubschlüssel oder z.B. radial angeordnete Senkbohrungen zum Einstecken von Stiften oder Hakenschlüsseln zum Erleichtern der Drehbewegung umfassen.

Um zu gewährleisten, dass die Verbindung druckdicht ist, ist zwischen dem Anschlusselement und dem Basiskörper außerhalb des Gewindebereichs mindestens eine Dichtung, insbesondere ein O-Ring, angeordnet. Eine bevorzugte Position für die Dichtung ist beispielsweise zwischen der Stirnseite des Anschlusselements und dem Basiselement.

Der Basiskörper sowie die Ventileinrichtungen sind bevorzugt aus Kunststoff oder Edelstahl hergestellt. Bei Verwendung von Kunststoff kann der Mehrwegeventilblock mit einem geringen Gewicht hergestellt werden.

Weitere Vorteile, Merkmale und Einzelheiten der Erfindung ergeben sich aus den Unteransprüchen sowie der nachfolgenden Beschreibung, in der zwei besonders bevorzugte Ausführungsbeispiele beschrieben sind. Dabei können die in der Zeichnung dargestellten und in der Beschreibung sowie den Ansprüchen erwähnten Merkmale jeweils einzeln für sich oder in beliebiger Kombination erfindungswesentlich sein.

In der Zeichnung zeigen, jeweils in schematischer Form:
Figur 1 ein erfindungsgemäßer Mehrwegeventilblock in einer perspektivischen Ansicht;
Figur 2 der Mehrwegeventilblock aus Figur 1 in einer Draufsicht;
Figur 3 der Mehrwegeventilblock aus Figur 1 in einer Seitenansicht;
Figur 4 eine Schnittdarstellung IV - IV gemäß Figur 2;
Figur 5 ein Anschlusselement für eine Anschlussleitung des Mehrwegeventilblocks der Figuren 1 bis 4 in einer Seitenansicht;
Figur 6 einen Längsschnitt VI - VI des Anschlusselements gemäß Figur 5;
Figur 7 einen Teil der geteilten Schraubhülse des Mehrwegeventilblocks der Figuren 1 bis 4 in einer Frontalansicht VII gemäß Figur 9;
Figur 8 die Schraubhülse der Figur 7 in einer Seitenansicht VIII gemäß Figur 9;
Figur 9 die Schraubhülse aus Figur 7 in einer Draufsicht IX gemäß Figur 8;
Figur 10 eine vergrößerte Wiedergabe des Ausschnitts X der Figur 4 im Detail in einer ersten Ausführungsform; und
Figur 11 eine vergrößerte Wiedergabe des Ausschnitts X der Figur 4 im Detail in einer zweiten Ausführungsform.

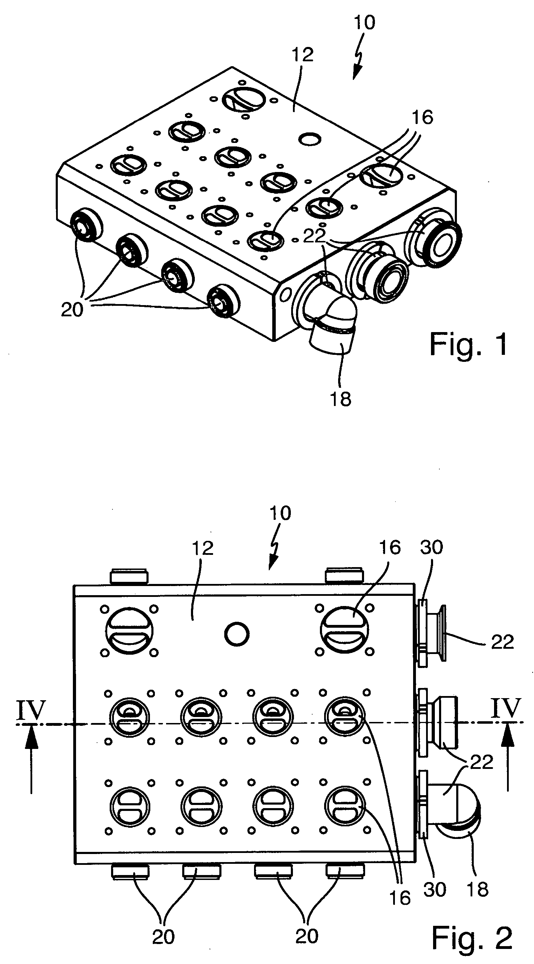

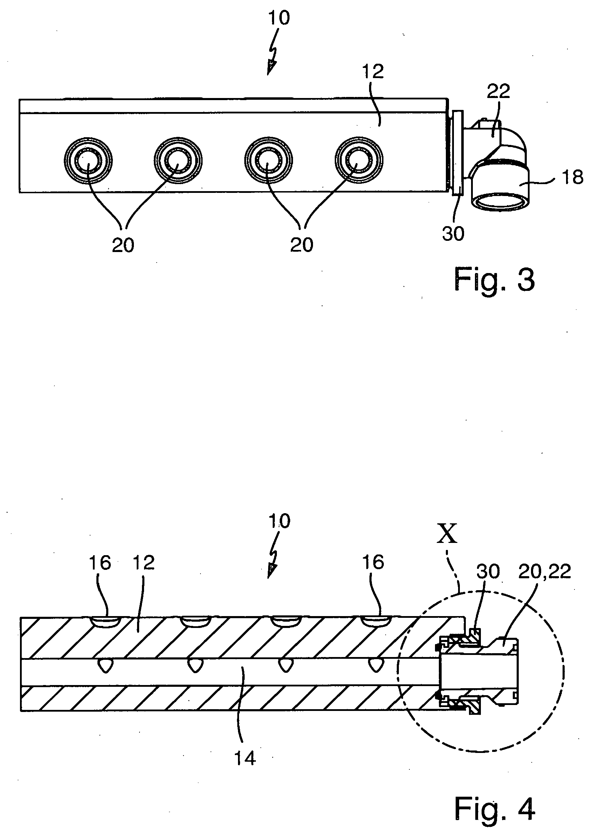

Die Figuren 1 bis 4 zeigen einen erfindungsgemäßen Mehrwegeventilblock 10, wobei die Figur 1 eine perspektivische Darstellung, die Figur 2 eine Draufsicht, die Figur 3 eine Seitenansicht und die Figur 4 einen Schnitt IV - IV gemäß Figur 2 darstellen. Der Mehrwegeventilblock 10 umfasst einen im Wesentlichen quaderförmigen Basiskörper 12 mit im Innern angeordneten Strömungswegen 14, in denen Gase, Flüssigkeiten oder Dampf, oder allgemein Fluide, strömen. Der Mehrwegeventilblock 10 ist bevorzugt aus Kunststoff oder Edelstahl hergestellt.

Der Mehrwegeventilblock 10 weist außerdem mehrere Ventileinrichtungen 16 auf. In den Figuren 1 bis 4 ist jeweils nur ein Teil der Ventileinrichtung 16, nämlich der Ventilsteg, sichtbar. Die vollständige Ventileinrichtung 16 umfasst üblicherweise noch jeweils eine Membrane, die über eine auf dem Basiskörper 12 angeordnete, nicht dargestellte, Betätigungseinrichtung mit dem in den Figuren 1 bis 4 dargestellten Teil der Ventileinrichtung 16 zusammenwirkt. Die Membrane wird in der Regel pneumatisch, elektrisch oder mechanisch (manuell) betätigt und sperrt in der Ventileinrichtung 16 Strömungswege 14 ab. Deshalb sind die Ventileinrichtungen 16 bevorzugt in Kreuzungspunkten der Strömungswege 14 angeordnet.

Ferner weist der Mehrwegeventilblock 10 Einlass-Anschlusselemente 20 und Auslass-Anschlusselemente 22 zum Anschließen von Anschlussleitungen auf. Zwischen dem jeweiligen Anschlusselement 20, 22 und der Anschlussleitung kann auch noch ein Fitting 18 angeordnet sein, wie die Figuren 1 bis 3 zeigen. Über die Einlass-Anschlusselemente 20 wird ein flüssiges oder gasförmiges Medium in die Strömungswege 14 des Mehrwegeventilblocks 10 ein- oder ausgeleitet. Das Medium wird über die einzelnen Ventileinrichtungen 16 auf ausgewählte Strömungswege 14 verteilt, abgesperrt oder anderweitig wie gewünscht gesteuert, damit das Medium anschließend über bestimmte Auslass-Anschlusselemente 22 wieder austreten kann. Die Anschlusselemente 20, 22 sind deshalb jeweils an einem freien Ende der Strömungswege 14 angeordnet. Die Anzahl der Einlass-Anschlusselemente 20 und der Auslass-Anschlusselemente 22 kann nach Bedarf festgelegt werden. Auch deren Anordnung am Mehrwegeventilblock 10 ist beliebig. In den Figuren 1 bis 3 sind die Einlass-Anschlusselemente 20 unterschiedlich zu den Auslass-Anschlusselemente 22 dargestellt. Es ist jedoch auch möglich, dass beide Anschlusselemente 20, 22 gleichartig ausgebildet sind. Auch können die Einlass-Anschlusselemente 20 in einer anderen Anwendung als Auslass-Anschlusselemente 22 dienen, das heißt, dass die Anschlusselemente 20, 22 nicht gemäß ihrer Funktion ausgebildet sein müssen. Die Anschlusselemente 20, 22 sind bevorzugt aus Kunststoff oder Edelstahl hergestellt.

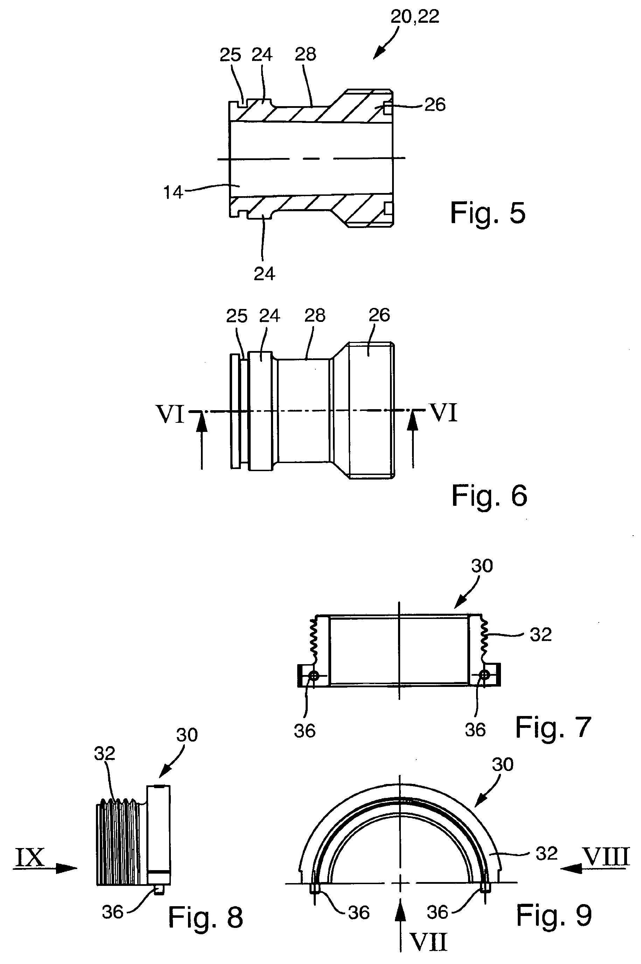

Die Figuren 5 und 6 zeigen das Anschlusselement 20, 22 im Detail, wobei die Figur 6 einen in Figur 5 dargestellten Schnitt VI - VI zeigt. Das Anschlusselement 20, 22 ist hohl ausgebildet und weist insbesondere in einem Bereich, der im eingebauten Zustand zum Grundkörper 12 zeigt, eine radial nach außen abragende Schulter 24 auf, die insbesondere als umlaufender Außenbund ausgebildet ist. Außerdem weist das Anschlusselement 20, 22 zwischen der Schulter 24 und der Stirnseite des Anschlusselements 20, 22 eine Umfangsnut 25 auf.

Am gegenüberliegenden Ende des Anschlusselements 20, 22 ist eine Vorrichtung 26 zum Befestigen der Anschlussleitung vorgesehen. Die Befestigung der Anschlussleitung am Anschlusselement 20, 22 ist beliebig. Sie kann beispielsweise über ein am Anschlusselement 20, 22 angeordnetes Innen- oder Außengewinde aber auch über eine Steckverbindung geschehen. Die gewählten Anschlussmöglichkeiten sind druckdicht ausgebildet.

Das Anschlusselement 20, 22 weist zwischen der Schulter 24 und der Vorrichtung 26 zum Befestigen der Anschlussleitung eine ebene, glatt ausgebildete radiale Einschnürung 28 auf.

Das Anschlusselement 20, 22 wird erfindungsgemäß durch eine geteilte mehrteilige Schraubhülse 30 am Basiskörper 12 befestigt. Die Figuren 7 bis 9 zeigen einen Teil einer geteilten mehrteiligen Schraubhülse 30 im Detail. Die geteilte Schraubhülse 30 ist bevorzugt zweiteilig, sie kann aber auch mehr als zwei Teile umfassen. Bei der zweigeteilten Schraubhülse 30 bildet ein erster Teil eine erste Hälfte und ein zweiter Teil eine zweite Hälfte der axial geteilten Schraubhülse 30. Die Schraubhülse 30 ist bevorzugt aus Kunststoff oder Edelstahl hergestellt.

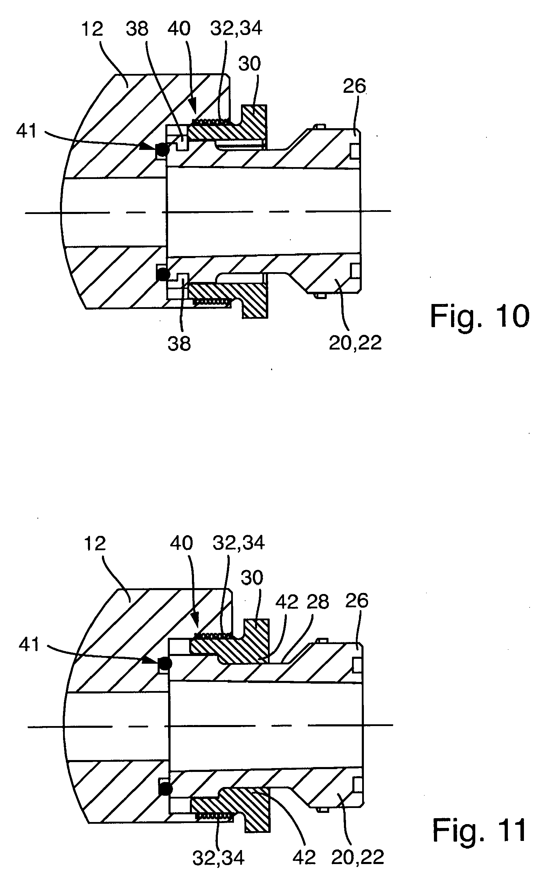

Die Schraubhülse 30 weist ein Außengewinde 32 auf, das beim Befestigen des Anschlusselements 20, 22 mit einem Innengewinde 34 des Basiskörpers 12 zusammenwirkt, was in den Figuren 10 und 11 dargestellt ist. Außerdem ist an einem der beiden freien Ende der in den Figuren 7 bis 9 dargestellten ersten Hälfte der Schraubhülse 30 ein Zapfen 36 angeordnet, der beim Zusammensetzen der kompletten Schraubhülse 30 mit einer Zapfenaufnahme am freien Ende der zweiten Hälfte der Schraubhülse 30 zusammenwirkt (nicht dargestellt) und so eine sichere Verbindung der Teile der Schraubhülse 30 gewährleistet.

Für die Ausgestaltung der Innenfläche der Schraubhülse 30 gibt es verschiedene Möglichkeiten, wobei deren jeweilige Montage unterschiedlich ausgeführt werden muss. Zwei Ausführungsbeispiele werden mit Hilfe der Figuren 10 und 11 erläutert.

Für das in Figur 10 dargestellte erste Ausführungsbeispiel ist zusätzlich ein in Achsrichtung bevorzugt zweigeteiltes Ringelement 38 zur Arretierung des Anschlusselements 20, 22 nötig. Das Ringelement 38 weist bevorzugt einen L-förmigen Querschnitt auf. Das Ringelement 38 kann auch mehrteilig ausgebildet sein.

Die Montage des Anschlusselements 20, 22 verläuft folgendermaßen: Ein Schenkel des L-förmig ausgebildeten und geteilten Ringelements 38 wird vor dem Montieren des Anschlusselements 20, 22 von außen in die Umfangsnut 25 des Anschlusselements 20, 22 eingesetzt.

Außerdem kann eine Dichtung 41, die beispielsweise als O-Ring ausgebildet ist, in die dafür vorgesehene Nut in einem Anschlussbereich 40, vorzugsweise zwischen der Stirnfläche des Anschlusselements 20, 22 und dem Basiskörper 12, eingesetzt werden.

Die Schraubhülse 30 ist auf der Innenseite eben ausgebildet, so dass die zweigeteilte Schraubhülse 30 in einfacher Weise beidseitig um den Umfang der Schulter 24 des Anschlusselements 20, 22 gelegt werden kann. Die Schraubhülse 30 umschließt damit das Anschlusselement 20, 22 und kann anschließend mit ihrem Außengewinde 32 in das Innengewinde 34 des Anschlussbereichs 40 manuell oder mittels eines Werkzeugs eingeschraubt werden. Um das Einschrauben und Herausschrauben der Schraubhülse 30 zu erleichtern, kann die Schraubhülse 30 am Außenumfang beispielsweise eine Rändelung oder eine Werkzeugangriffsfläche aufweisen. Die Schraubhülse 30 gleitet dabei auf der Schulter 24 des Anschlusselements 20, 22, so dass dabei das Anschlusselement 20, 22 nicht mitgedreht.

Die Schraubhülse 30 wird so lange gedreht, bis die Schraubhülse 30 das Ringelement 38 als Anschlag erreicht hat. In dieser Position liegt die Stirnseite des Anschlusselements 20, 22 im Anschlussbereich 40 des Basiskörper 12 an. Der in die Umfangsnut 25 eingesetzte Schenkel des Ringelements 38 arretiert das Anschlusselement 20, 22 im Anschlussbereich 40 des Basiskörpers 12. Das Anschlusselement 20, 22 ist jetzt druckdicht und sicher im Anschlussbereich 40 des Basiskörpers 12 eingesetzt, kann aber jederzeit wieder herausgeschraubt werden.

Anschließend kann über die Vorrichtung 26 des Anschlusselements 20, 22 die Anschlussleitung angeschlossen werden. Dies kann in beliebiger Weise, beispielsweise über ein am Anschlusselement 20, 22 angeordnetes Innen- oder Außengewinde aber auch über eine Steckverbindung geschehen (nicht dargestellt).

In dem in Figur 11 dargestellten zweiten Ausführungsbeispiel ist die Innenseite der Schraubhülse 30 dem Profil des Anschlusselements 20, 22 angepasst. Dazu weist die Schraubhülse 30 eine radial nach innen ragende, insbesondere als umlaufender Innenbund ausgebildete Schulter 42 auf, die zur Einschnürung 28 des Anschlusselements 20, 22 komplementär ausgebildet ist. Beim Einschrauben der Schraubhülse 30 in den Anschlussbereich 40 des Basiskörpers 12 liegt die Schulter 42 bündig in der Einschnürung 28.

Außerdem liegen die jeweiligen Anlageflächen der Schulter 24 des Anschlusselements 20, 22 und der Schulter 42 der Schraubhülse 30 insbesondere beim Einschrauben der Schraubhülse 30 aneinander an und wirken derart zusammen, dass die Schraubhülse 30 das Anschlusselement 20, 22 in den Anschlussbereich 40 hineinschiebt. Besonders vorteilhaft ist dabei, wenn die aneinander anliegenden Anlageflächen der beiden Schultern 24 und 42 komplementär zueinander verlaufen und einen Winkel zur Längsachse einschließen, der kleiner als 90° ist. Bei dieser zweiten Ausführungsform kann auf das geteilte Ringelement 38 der ersten Ausführungsform verzichtet werden. Ansonsten verläuft die Montage des Anschlusselements 20, 22 gemäß der Beschreibung zur ersten Ausführungsform.

## Patentansprüche

1. Mehrwegeventilblock (10) zur Steuerung von strömenden Flüssigkeiten oder Gasen, wobei der Mehrwegeventilblock (10) umfasst:
- einen Basiskörper (12) mit im Innern angeordneten Strömungswegen (14),
- mindestens eine Ventileinrichtung (16), die an oder im Basiskörper (12) angeordnet ist und die Strömungswege (14) öffnet, sperrt und/oder miteinander verbindet, und
- mindestens ein Einlass-Anschlusselement (20) und mindestens ein Auslass-Anschlusselement (22), die jeweils in einem Anschlussbereich (40) an freien Enden der im Basiskörper (12) angeordneten Strömungswege (14) angeordnet sind,
wobei mindestens ein Einlass-Anschlusselement (20) und/oder mindestens ein Auslass-Anschlusselement (22) lösbar mit Hilfe einer in Achsrichtung geteilten Schraubhülse (30) am Basiskörper (12) angeordnet ist **dadurch gekennzeichnet, dass** das Anschlusselement (20; 22) eine Umfangsnut (25) umfasst, in die zur Arretierung des Anschlusselements (20; 22) im Anschlussbereich (40) des Basiskörpers (12) zumindest ein Teil eines in Achsrichtung geteilten und die Umfangsnut (25) radial überragenden Ringelements (38) zumindest abschnittsweise eingreift, dass das Anschlusselement (20, 22) in eine Öffnung im Basiskörper (12) eingeführt ist, und dass die Schraubhülse (30) einerseits ein Außengewinde (32) aufweist, das mit einem im Anschlussbereich (40) des Basiskörpers (12) angeordneten Innengewinde (34) so zusammenwirkt, dass die Schraubhülse (30) beim Eindrehen das Ringelement (38) als Anschlag erreicht.

2. Mehrwegeventilblock nach Anspruch 1, **dadurch gekennzeichnet, dass** das Ringelement (38) ein L-förmiges Profil aufweist, wobei ein Schenkel des L-förmigen Profils in die Umfangsnut (25) eingreift, und das Ringelement (38) im Bereich der dem Basiselement (12) zugewandten Stirnseite des Anschlusselements (20; 22) angeordnet ist.

3. Mehrwegeventilblock nach einem der vorhergehenden Ansprüche, **dadurch gekennzeichnet, dass** das Anschlusselement (20; 22) eine radial nach außen abragende Schulter (24) aufweist, die insbesondere als umlaufender Außenbund ausgebildet ist.

4. Mehrwegeventilblock nach Anspruch 3, **dadurch gekennzeichnet, dass** die Schraubhülse (30) eine radial nach innen ragende, insbesondere als umlaufender Innenbund ausgebildete Schulter (42) aufweist, wobei die Schulter (24) des Anschlusselements (20; 22) und die Schulter (42) der Schraubhülse (30) beim Einschrauben der Schraubhülse in den Anschlussbereich (40) des Basiskörpers (12) aneinander anliegen und zusammenwirken.

5. Mehrwegeventilblock nach Anspruch 4, **dadurch gekennzeichnet, dass** die aneinander anliegenden Anlageflächen der beiden Schultern (24, 42) des Anschlusselements (20; 22) und der Schraubhülse (30) komplementär zueinander verlaufen und einen Winkel zur Längsachse einschließen, der kleiner als 90° ist.

6. Mehrwegeventilblock nach einem der vorhergehenden Ansprüche, **dadurch gekennzeichnet, dass** zwischen dem Anschlusselement (20; 22) und dem Basiskörper (12) außerhalb des Gewindebereichs (32, 34) mindestens eine Dichtung (41), insbesondere ein O-Ring, angeordnet ist.

7. Mehrwegeventilblock nach Anspruch 6, **dadurch gekennzeichnet, dass** die Dichtung (41) zwischen der Stirnseite des Anschlusselements (20; 22) und dem Basiselement (12) angeordnet ist.

8. Mehrwegeventilblock nach einem der vorhergehenden Ansprüche, **dadurch gekennzeichnet, dass** das Anschlusselement (20; 22) an seiner vom Basiselement (12) abgewandten Seite ein Außen- und/oder ein Innengewinde aufweist.

9. Mehrwegeventilblock nach einem der vorhergehenden Ansprüche, **dadurch gekennzeichnet, dass** das Anschlusselement (20; 22) austauschbar ist.

10. Mehrwegeventilblock nach einem der vorhergehenden Ansprüche, **dadurch gekennzeichnet, dass** das Anschlusselement (20; 22) und/oder die Schraubhülse (30) aus Kunststoff oder Metall, insbesondere aus Edelstahl, hergestellt ist/sind.

11. Mehrwegeventilblock nach einem der vorhergehenden Ansprüche, **dadurch gekennzeichnet, dass** die Schraubhülse (30) auf einer nach außen zeigenden Seite eine Rändelung oder Werkzeugangriffsfläche aufweist.

12. Mehrwegeventilblock nach einem der vorhergehenden Ansprüche, **dadurch gekennzeichnet, dass** die Schraubhülse (30) zwei- oder mehrteilig ausgebildet ist.

## Claims

1. Multiway valve block (10) for controlling flowing liquids or gases, the multiway valve block (10) comprising:
- a base body (12) having flow paths (14) arranged in its interior,
- at least one valve means (16) which is arranged in or on the base body (12) and which opens, closes and/or connects together flow paths (14), and
- at least one inlet connecting member (20) and at least one outlet connecting member (22) which are arranged in respective connecting regions (40) at free ends of the flow paths (14) arranged in the base body (12),
at least one inlet connecting member (20) and/or at least one outlet connecting member (22) being arranged on the base body (12) in such a way as to be detachable with the help of a screwed sleeve (30) which is divided in the axial direction, **characterised in that** the connecting member (20, 22) comprises a circumferential groove (25) in which, to lock the connecting member (20, 22) into the connecting region (40) of the base body (12), at least a portion or portions of at least one part of an annular member (38), which latter is divided in the axial direction and projects beyond the circumferential groove (25) radially, engages, **in that** the connecting member (20, 22) is inserted in an opening in the base body (12), and **in that** the screwed sleeve (30) has at one end an external thread (32) which co-operates with an internal thread (34) arranged in the connecting region (40) of the base body (12), in such a way that the screwed sleeve (30), as it is screwed in, arrives at the annular member (38) as an abutment.

2. Multiway valve block according to claim 1, **characterised in that** annular member (38) is L-shaped in profile, with one limb of the L-shaped profile engaging in the circumferential groove (25), and the annular member (38) is arranged in the region of that end of the connecting member (20, 22) which is adjacent the base body (12).

3. Multiway valve block according to either of the preceding claims, **characterised in that** the connecting member (20, 22) has a shoulder (24) which projects outwards radially and which in particular takes the form of an external collar extending round in a loop.

4. Multiway valve block according to claim 3, **characterised in that** the screwed sleeve (30) has a shoulder (42) which projects inwards radially and which in particular takes the form of an internal collar extending round in a loop, the shoulder (24) of the connecting member (20, 22) and the shoulder (42) of the screwed sleeve (30) bearing against one another and co-operating as the screwed sleeve (30) is screwed into the connecting region (40) of the base body (12).

5. Multiway valve block according to claim 4, **characterised in that** the contacting faces which bear against one another of the two shoulders (24, 42) of the connecting member (20, 22) and the screwed sleeve (30) extend in forms complementary to one another and make an angle of less than 90° with the longitudinal axis.

6. Multiway valve block according to one of the preceding claims, **characterised in that** at least one seal (41), and in particular an O-ring, is arranged between the connecting member (20, 22) and the base body (12), clear of the region occupied by the threads (32, 34).

7. Multiway valve block according to claim 6, **characterised in that** the seal (41) is arranged between the end-face of the connecting member (20, 22) and the base body (12).

8. Multiway valve block according to one of the preceding claims, **characterised in that** the connecting member (20, 22) has an external and/or internal thread at its end remote from the base body (12).

9. Multiway valve block according to one of the preceding claims, **characterised in that** the connecting member (20, 22) is replaceable.

10. Multiway valve block according to one of the preceding claims, **characterised in that** the connecting member (20, 22) and/or the screwed sleeve (30) are/is made of plastics material or metal and in particular of stainless steel.

11. Multiway valve block according to one of the preceding claims, **characterised in that** the screwed sleeve (30) has knurling or surfaces for the application of a tool on a side facing outwards.

12. Multiway valve block according to one of the preceding claims, **characterised in that** the screwed sleeve (30) is in a one-piece or multi-piece form.

## Revendications

1. Bloc de soupape multivoies (10) pour le contrôle de l'écoulement de liquides ou de gaz, le bloc de soupape multivoies (10) comprenant :
- un corps de base (12) avec des vois d'écoulement (14) disposées à l'intérieur,
- au moins un dispositif à soupape (16), qui est disposé sur ou dans le corps de base (12) et qui ouvre, bloque et/ou relie entre elles les voies d'écoulement (14), et
- au moins un élément de raccordement d'admission (20) et au moins un élément de raccordement d'évacuation (22), qui sont disposés chacun dans une partie de raccordement (40) au niveau des extrémités libres des voies d'écoulement (14) disposées dans le corps de base (12),
au moins un élément de raccordement d'admission (20) et/ou au moins un élément de raccordement d'évacuation (22) étant disposés de manière amovible, à l'aide d'un manchon vissé (30) divisé dans la direction axiale, sur le corps de base (12), **caractérisé en ce que** l'élément de raccordement (20 ; 22) comprend une rainure périphérique (25) dans laquelle s'emboîte, au moins partiellement, pour le blocage de l'élément de raccordement (20 ; 22) dans la partie de raccordement (40) du corps de base (12), au moins une partie d'un élément annulaire (38) dépassant radialement de la rainure périphérique (25), **en ce que** l'élément de raccordement (20, 22) est inséré dans une ouverture dans le corps de base (12) et **en ce que** le manchon vissé (30) comprend, d'une part, un filetage externe (32), qui interagit avec un filetage interne (34) disposé dans la partie de raccordement (40) du corps de base (12), de façon à ce que le manchon vissé (30) atteint l'élément annulaire (38) en tant que butée lors d'une rotation.

2. Bloc de soupape multivoies selon la revendication 1, **caractérisé en ce que** l'élément annulaire (38) comprend un profilé en forme de L, un montant du profilé en forme de L s'emboîtant dans la rainure périphérique (25) et l'élément annulaire (38) étant disposée au niveau du côté frontal de l'élément de raccordement (20 ; 22) orienté vers l'élément de base (12).

3. Bloc de soupape multivoies selon l'une des revendications précédentes, **caractérisé en ce que** l'élément de raccordement (20 ; 22) comprend un épaulement (24) dépassant radialement vers l'extérieur, qui est conçu plus particulièrement comme un collet extérieur circulaire.

4. Bloc de soupape multivoies selon la revendication 3, **caractérisé en ce que** le manchon vissé (30) comprend un épaulement (42) dépassant vers l'intérieur et conçu plus particulièrement comme un collet extérieur circulaire, l'épaulement (24) de l'élément de raccordement (20 ; 22) et l'épaulement (42) du manchon vissé (30) s'appuyant l'un contre l'autre et interagissant entre eux lors du vissage du manchon vissé dans la partie de raccordement (40) du corps de base (12).

5. Bloc de soupape multivoies selon la revendication 4, **caractérisé en ce que** les surfaces d'appui, s'appuyant l'une contre l'autre, des deux épaulements (24, 42) de l'élément de raccordement (20 ; 22) et du manchon vissé (30) sont complémentaires l'un avec l'autre et forment entre eux un angle par rapport à l'axe longitudinal, qui est inférieur à 90°.

6. Bloc de soupape multivoies selon l'une des revendications précédentes, **caractérisé en ce que**, entre l'élément de raccordement (20 ; 22) et le corps de base (12), à l'extérieur de la partie filetée (32, 34), au moins un joint d'étanchéité (41), plus particulièrement un joint torique.

7. Bloc de soupape multivoies selon la revendication 6, **caractérisé en ce que** le joint d'étanchéité (41) se trouve entre le côté frontal de l'élément de raccordement (20 ; 22) et l'élément de base (12).

8. Bloc de soupape multivoies selon l'une des revendications précédentes, **caractérisé en ce que** l'élément de raccordement (20 ; 22) comprend, au niveau de son côté opposé à l'élément de base (12), un filetage externe et/ou un filetage interne.

9. Bloc de soupape multivoies selon l'une des revendications précédentes, **caractérisé en ce que** l'élément de raccordement (20 ; 22) est interchangeable.

10. Bloc de soupape multivoies selon l'une des revendications précédentes, **caractérisé en ce que** l'élément de raccordement (20 ; 22) et/ou le manchon vissé (30) est/sont constitué(s) de matière plastique ou de métal, plus particulièrement d'acier inoxydable.

11. Bloc de soupape multivoies selon l'une des revendications précédentes, **caractérisé en ce que** le manchon vissé (30) comprend, sur un côté orienté vers l'extérieur, un moletage ou une surface d'attaque d'outil.

12. Bloc de soupape multivoies selon l'une des revendications précédentes, **caractérisé en ce que** le manchon vissé (30) est conçu en deux pièces ou plus.
